# EUROPÄISCHE PATENTSCHRIFT

(11) **EP 2 577 082 B1**
(45) Veröffentlichungstag und Bekanntmachung des Hinweises auf die Patenterteilung: **23.04.2014**
(21) Anmeldenummer: 11729367.0
(22) Anmeldetag: 01.06.2011
(51) Int. Cl.: F16D 33/16

(54) **HYDRODYNAMISCHE KUPPLUNG**
HYDRODYNAMIC COUPLING
ACCOUPLEMENT HYDRODYNAMIQUE

(30) Priorität: 07.06.2010 DE 102010022848
(43) Veröffentlichungstag der Anmeldung: 10.04.2013
(73) Patentinhaber: Voith Patent GmbH, 89522 Heidenheim (DE)
(72) Erfinder: SCHERRLE, Jan, 74564 Crailsheim (DE); HUTZENLAUB, Stefan, 74564 Crailsheim (DE); SCHUST, Bernhard, 74594 Kressberg 1 (DE); HOFFELD, Harald, 74564 Crailsheim (DE)
(74) Vertreter: Dr. Weitzel & Partner
(86) Internationale Anmeldenummer: PCT/EP2011/002697
(87) Internationale Veröffentlichungsnummer: WO 2011/154109

(56) Entgegenhaltungen:
- WO-A1-02/18811
- WO-A1-02/18821
- WO-A1-03/054407
- WO-A1-2004/005759
- FR-A6- 2 331 256
- GB-A- 2 172 965

## Beschreibung

Die vorliegende Erfindung betrifft eine hydrodynamische Kupplung gemäß dem Oberbegriff von Anspruch 1.

Eine solche hydrodynamische Kupplung, wie sie beispielsweise in der Patentschrift DE 197 07 172 C1 beschrieben wird, umfasst ein Pumpenrad und ein Turbinenrad, die miteinander einen torusförmigen Arbeitsraum ausbilden. Der Arbeitsraum ist wahlweise mehr oder weniger mit einem Arbeitsmedium befüllbar, um durch Änderung des Füllungsgrades des Arbeitsraumes mit Arbeitsmedium die Leistungsübertragung der hydrodynamischen Kupplung vom Pumpenrad auf das Turbinenrad zu variieren. Eine solche hydrodynamische Kupplung wird daher auch als füllungsgesteuerte hydrodynamische Kupplung bezeichnet.

Um die variable Befüllung des Arbeitsraumes mit Arbeitsmedium zu ermöglichen, ist ferner außerhalb des Arbeitsraumes ein Vorratsraum vorgesehen, der jenen Anteil von Arbeitsmedium aufnimmt, der bei einem Entleervorgang des Arbeitsraumes aus dem Arbeitsraum ausgetragen wird, beziehungsweise der bei einem Befüllvorgang des Arbeitsraumes noch nicht in den Arbeitsraum eingeleitet wurde. Der Vorratsraum könnte demnach auch als Ausgleichsbehälter bezeichnet werden.

Die vorliegende Erfindung betrifft nur solche hydrodynamische Kupplungen, bei welchen es keine direkte Verbindung zwischen dem Vorratsraum und dem Arbeitsraum gibt, über welche ein Arbeitsmediumaustausch zwischen diesen beiden Räumen stattfindet, sondern bei welchen der Vorratsraum an einem "externen" geschlossenen Arbeitsmediumkreislauf über eine arbeitsmediumleitende Verbindung angeschlossen ist. Ein solcher geschlossener Arbeitsmediumkreislauf führt das Arbeitsmedium über einen Arbeitsraumaustritt aus dem Arbeitsraum heraus in einen externen Kreislaufzweig und über einen Arbeitsraumeintritt zurück in den Arbeitsraum. Extern bedeutet dabei nicht zwingend, dass der Kreislaufzweig beziehungsweise der geschlossene Arbeitsmediumkreislauf außerhalb der hydrodynamischen Kupplung positioniert ist, sondern er kann auch teilweise oder vollständig innerhalb der hydrodynamischen Kupplung beziehungsweise innerhalb eines die hydrodynamische Kupplung umschließenden Gehäuses angeordnet sein. Der geschlossene Arbeitsmediumkreislauf dient beispielsweise dazu, dass Arbeitsmedium bei Bedarf oder permanent zu kühlen, indem in dem externen Kreislaufzweig ein Wärmetauscher beziehungsweise Kühler angeordnet ist.

Eine solche gattungsgemäße hydrodynamische Kupplung wird, wie in der Patentschrift DE 197 07 172 C1 beschrieben wird, herkömmlich dadurch in ihrem Füllungsgrad des Arbeitsraumes gesteuert, dass entweder eine besondere Pumpe zum Füllen der Kupplung vorgesehen ist, mittels welcher das Arbeitsmedium aus dem Vorratsraum in den geschlossenen Kreislauf gepumpt wird, oder indem ein freies Strömen von Arbeitsmedium aus dem Vorratsraum in den geschlossenen Kreislauf ermöglicht wird, indem der Vorratsraum als Hochbehälter ausgeführt ist, das heißt oberhalb der hydrodynamischen Kupplung positioniert ist, sodass beim Öffnen eines entsprechenden Ventils in der arbeitsmediumleitenden Verbindung zwischen dem Vorratsraum und dem geschlossenen Arbeitsmediumkreislauf das Arbeitsmedium aufgrund der Schwerkraft aus dem Vorratsraum in den geschlossenen Arbeitsmediumkreislauf und insbesondere unterstützt durch einen niedrigeren Druck an der Zweigstelle einströmt.

In der Praxis hat sich nun herausgestellt, dass beide genannte Lösungen-Füllpumpe und Hochbehälter - Nachteile aufweisen. Die Füllpumpe arbeitet zwar in jeder denkbaren Situation zuverlässig, benötigt jedoch zusätzliche Antriebsleistung und bedingt einen konstruktiven hohen Aufwand. Der Hochbehälter arbeitet energetisch günstig, da keine zusätzliche Antriebsleistung erforderlich ist, jedoch haben sich in der Praxis Situationen ergeben, in denen der gewünschte Füllungsgrad des Arbeitsraumes der hydrodynamischen Kupplung nicht mit der gewünschten Präzision eingestellt werden konnte, sodass das von der hydrodynamischen Kupplung übertragene Drehmoment beziehungsweise die von der hydrodynamischen Kupplung übertragene Antriebsleistung nicht dem durch eine Drehmomentsteuerung beziehungsweise Leistungssteuerung vorgegebenen Sollwert entsprach.

Eine solche Abweichung des Ist-Wertes der Leistungsübertragung vom Soll-Wert der Leistungsübertragung kann je nach Anwendungsfall der hydrodynamischen Kupplung weitere ungünstige Folgen nach sich ziehen. Wenn die hydrodynamische Kupplung beispielsweise, wie dies gemäß einer Ausführungsform der vorliegenden Erfindung möglich ist, in einer Triebverbindung zwischen einem Antriebsmotor und einem Lüfterrad eingesetzt wird, um einen Kühlluftstrom zu erzeugen, der dann eine Vorrichtung oder ein Medium, insbesondere Gas, kühlt, so führt die unerwünschte Leistungsabweichung möglicherweise zu einer nicht ausreichenden Kühlleistung und damit einem unzulässigen Temperaturanstieg.

Eine weitere hydrodynamische Kupplung ist an dem WO 02/18811 A1 bekannt.

Der vorliegenden Erfindung liegt die Aufgabe zugrunde, eine hydrodynamische Kupplung anzugeben, welche bei dem genannten Problem Abhilfe schafft. Die hydrodynamische Kupplung soll dabei energetisch genauso oder annähernd günstig wie die gattungsgemäße Kupplung mit Hochbehälter als Vorratsraum arbeiten und zugleich so zuverlässig, wie die hydrodynamische Kupplung mit Füllpumpe. Ferner soll der konstruktive Aufwand gering gehalten werden.

Die erfindungsgemäße Aufgabe wird durch eine hydrodynamische Kupplung mit den Merkmalen von Anspruch 1 gelöst. In den abhängigen Ansprüchen sind vorteilhafte und besonders zweckmäßige Gestaltungen der Erfindung angegeben.

Die hydrodynamische Kupplung ist dadurch gekennzeichnet, dass der Vorratsraum, welcher, wie eingangs dargelegt, über eine arbeitsmediumleitende Verbindung außerhalb des Arbeitsraumes am geschlossenen Arbeitsmediumkreislauf angeschlossen ist und zur Aufnahme des aus dem Arbeitsraum austretenden Arbeitsmediums beziehungsweise zum Ausgleich des in den Arbeitsraum eintretenden Arbeitsmediums dient, als gegenüber der Umgebung druckdicht abgeschlossener Raum mit einem Steuerdruckanschluss ausgeführt ist, um zur verdrängenden Beaufschlagung des Arbeitsmediums im Vorratsraum einen Steuerdruck in den Vorratsraum einleiten zu können.

Der Steuerdruckanschluss kann derart im Vorratsraum münden, dass das über den Steuerdruckanschluss in den Vorratsraum eingeleitete Steuerdruckmedium in einen unmittelbaren Kontakt mit dem Arbeitsmediumspiegel gelangt. Ein solcher Arbeitsmediumspiegel trennt das flüssige Arbeitsmedium, beispielsweise Öl oder Wasser, von einem Luftraum oder Gasraum oberhalb des Arbeitsmediums. Um einen Kontakt des Steuerdruckmediums mit dem Arbeitsmedium zu vermeiden, kann auch eine flexible oder verschiebbare Begrenzung, beispielsweise eine Membran oder ein Kolben, zwischen dem Steuerdruckanschluss und dem Arbeitsmedium vorgesehen sein und den Steuerdruckanschluss steuerdruckmediumdicht beziehungsweise arbeitsmediumdicht vom Arbeitsmedium trennen.

Als Steuerdruckmedium kommt insbesondere Luft oder ein anderes Gas als Luft in Betracht. Bei einem besonderen Einsatzgebiet der erfindungsgemäßen hydrodynamischen Kupplung kann diese dem Antrieb eines Lüfterrades dienen, das ein Medium, insbesondere ein anderes Gas als Luft, durch Erzeugen eines Kühlluftstromes unmittelbar oder mittelbar kühlt, und dieses Medium kann zugleich als Steuerdruckmedium verwendet werden.

Von Vorteil ist es, wenn der Vorratsraum als Ringraum ausgeführt ist, der sich innerhalb der hydrodynamischen Kupplung, insbesondere innerhalb eines die hydrodynamische Kupplung umschließenden Gehäuses, radial außerhalb des Arbeitsraumes der hydrodynamischen Kupplung um den Arbeitsraum herum erstreckt. Insbesondere bei einer derartigen Anordnung des Vorratsraumes kann dieser als stationärer Raum ausgeführt sein und durch eine stationäre Trennwand vom Pumpenrad und Turbinenrad abgetrennt sein, um eine Verwirbelung des Arbeitsmediums und/oder Steuerdruckmediums im Vorratsraum durch die umlaufenden Bauteile des Pumpenrades oder Turbinenrades zu verhindern. Wenn die hydrodynamische Kupplung von einem Gehäuse umschlossen wird, kann dieses Gehäuse zwei sich gegenüberliegende Stirnseiten aufweisen, die durch eine Umfangswand miteinander verbunden sind. Durch die erste Stirnseite ist insbesondere der Antrieb für das Pumpenrad und durch die zweite Stirnseite insbesondere der Abtrieb des Turbinenrades geführt.

Von Vorteil ist es, wenn in der ersten Stirnseite und/oder der zweiten Stirnseite eine Vielzahl von arbeitsmediumführenden Kanälen integriert sind und/oder solche Kanäle an der einen oder beiden Stirnseiten, insbesondere parallel oder im Wesentlichen parallel zu dieser/diesen verlaufend, angeschlossen sind. Diese arbeitsmediumführenden Kanäle umfassen mindestens einen Arbeitsmediumablauf, der das Arbeitsmedium aus dem Arbeitsraumaustritt in den externen Kreislaufzweig führt, einen Arbeitsmediumzulauf, der das Arbeitsmedium aus dem externen Kreislaufzweig in den Arbeitraumeintritt führt, und die arbeitsmediumleitende Verbindung, mittels welcher der Vorratsraum am geschlossenen Arbeitsmediumkreislauf angeschlossen ist.

Neben den genannten Verbindungen ist vorteilhaft ein Bypass, angeschlossen am oder integriert in einer der beiden Stirnseiten vorgesehen, welcher den Arbeitsmediumablauf hinsichtlich der Strömung des Arbeitsmediums parallel zu der arbeitsmediumleitenden Verbindung, über welche der Vorratsraum am geschlossenen Arbeitsmediumkreislauf angeschlossen ist, mit dem Arbeitsmediumzulauf arbeitsmediumleitend verbindet. In dem Bypass kann ein Rückschlagventil angeordnet sein, das eine Arbeitsmediumströmung ausschließlich in Richtung vom Arbeitsmediumablauf zum Arbeitsmediumzulauf ermöglicht.

Im externen Kreislaufzweig, der insbesondere teilweise oder vollständig außerhalb des Gehäuses der hydrodynamischen Kupplung positioniert ist, ist vorteilhaft ein Wärmetauscher zum Kühlen des Arbeitsmediums angeordnet.

Wenn die hydrodynamische Kupplung einen mit dem Arbeitsraum in arbeitsmediumleitender Verbindung stehenden Nebenraum aufweist, ist dieser vorteilhaft axial neben dem Arbeitsraum und radial innerhalb des Vorratsraumes positioniert. Der Nebenraum kann dazu dienen, aus dem Arbeitsraum ausströmendes Arbeitsmedium, beispielsweise über den Trennspalt zwischen dem Pumpenrad und dem Turbinenrad ausströmendes Arbeitsmedium aufzunehmen. Aus dem Nebenraum kann dann das Arbeitsmedium, insbesondere mittels einer Staudruckpumpe zurück in den Vorratsraum gefördert werden. Somit ergibt sich der Vorteil, dass der Nebenraum als nicht umlaufender Raum ausgeführt sein kann, sodass das Einbringen der Mündung einer Staudruckpumpe vereinfacht ist. Der Nebenraum kann auch mit einer Schälkante versehen sein, um das Arbeitsmedium in den Bereich vor der Mündung der Staudruckpumpe zu bringen. Selbstverständlich sind auch andere Ausführungen möglich, um das Arbeitsmedium aus dem Nebenraum in den Vorratsraum zu fördern, beispielsweise mit einem insbesondere in Radialrichtung verstellbaren Schöpfrohr.

Insbesondere wenn als Steuerdruckmedium ein Gas verwendet wird, ist es günstig, wenn der Arbeitsmediumzulauf eine Querschnittserweiterung, insbesondere eine stufenartige beziehungsweise sprunghafte Querschnittserweiterung aufweist, um das Arbeitsmedium an dieser Querschnittserweiterung zu expandieren, vorteilhaft bis auf atmosphärischen Druck. Hierdurch kann erreicht werden, dass zum einen eine Geschwindigkeitsreduzierung des Arbeitsmediums im Zulauf erfolgt, was Verlustleistungen reduziert, und dass möglicherweise in dem Vorratsraum durch das Arbeitsmedium aufgenommenes Steuerdruckmedium entgast, bevor es in den Arbeitsraum der hydrodynamischen Kupplung und/oder in den Bereich der umlaufenden Bauteile eintritt.

Die Erfindung soll nun nachfolgend anhand eines Ausführungsbeispiels und den Figuren exemplarisch beschrieben werden.

Es zeigen:
- Figur 1: einen Axialschnitt durch eine erfindungsgemäß ausgeführte hydrodynamische Kupplung;
- Figur 2: einen Schnitt entlang der Linie A - A der Figur 1.

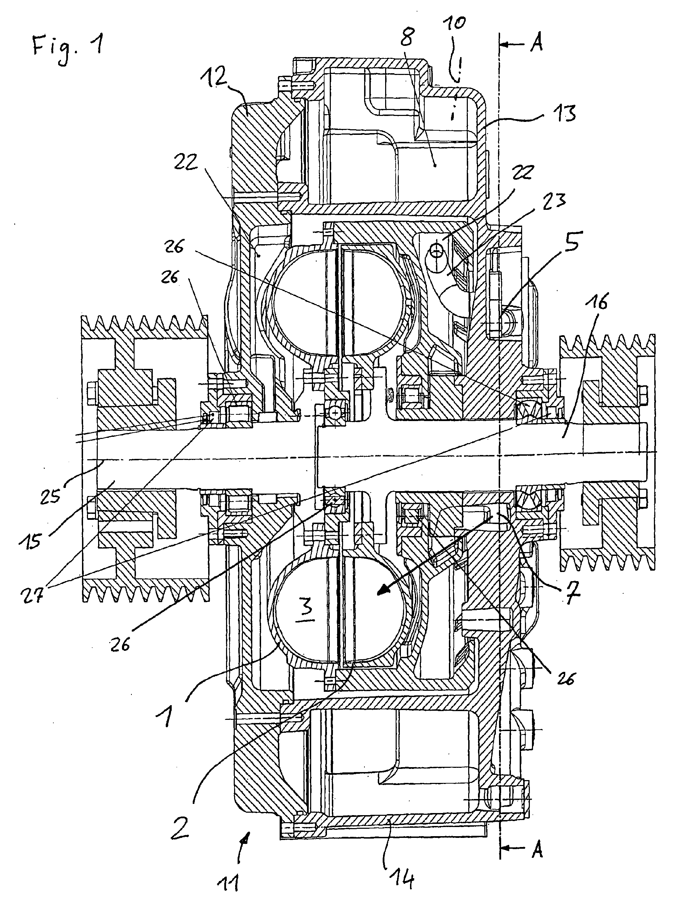

In der Figur 1 ist ein Axialschnitt durch die hydrodynamische Kupplung, geführt durch die Drehachse 25 derselben gezeigt. Sowohl das Pumpenrad 1 als auch das Turbinenrad 2 laufen über der Drehachse 25 um. Das Pumpenrad 1 wird über einen Antrieb 15, vorliegend in Form einer Antriebswelle, die eine Riemenscheibe trägt, angetrieben. Das Turbinenrad 2 treibt einen Abtrieb 16 an, vorliegend in Form einer Abtriebswelle, die eine Riemenscheibe trägt.

Das Pumpenrad 1 und das Turbinenrad 2 schließen gemeinsam einen torusförmigen Arbeitsraum 3 ein, in dem sich durch den Antrieb des Pumpenrads 1 eine hydrodynamische Kreislaufströmung ausbildet, mittels welcher Antriebsleistung vom Pumpenrad 1 auf das Turbinenrad 2 übertragen wird. Der Füllungsgrad des Arbeitsraumes 3 mit Arbeitsmedium, das die Kreislaufströmung ausbildet, ist variierbar. Zum Ausgleich ist ein Vorratsraum 8 vorgesehen, der als stationärer Raum ausgeführt ist, wobei sämtliche Begrenzungswände des Vorratsraumes 8 nicht umlaufen, und der den Arbeitsraum 3 beziehungsweise das Pumpenrad 1 und das Turbinenrad 2 in Umfangsrichtung umschließt.

In arbeitsmediumleitender Verbindung mit dem Arbeitsraum 3 steht ein Nebenraum 22, der vorliegend im Wesentlichen auf demselben Durchmesser wie der Arbeitsraum 3 innerhalb der hydrodynamischen Kupplung angeordnet ist und sich auf einer axialen Seite oder beiden axialen Seiten des Arbeitsraumes 3 erstreckt. In den Nebenraum 22 ragt eine Staudruckpumpe 23, deren Mündung entgegen der Drehrichtung des Pumpenrads 1 und des Turbinenrads 2 gerichtet ist, sodass im Nebenraum 22 befindliches Arbeitsmedium mittels eines sich vor der Mündung ausbildenden Staudruckes in das Rohr der Staudruckpumpe 23 eingeleitet wird.

Aus der Staudruckpumpe 23 strömt das Arbeitsmedium weiter zu einem Arbeitsraumaustritt 5, der in einer Stirnseite, vorliegend der zweiten Stirnseite 13, durch welche der Abtrieb 16 geführt ist, integriert ist. Der Arbeitsraumaustritt 5 ist demnach nicht unmittelbar an der Schnittstelle zwischen dem Arbeitsraum 3 und des diesen umgebenden Bauraumes angeordnet, sondern sozusagen in Strömungsrichtung des Arbeitsmediums hinter dem Nebenraum 22. Man könnte den Arbeitsraum 3 zusammen mit dem Nebenraum 22 auch als erweiterten Arbeitsraum der hydrodynamischen Kupplung bezeichnen.

Die in der Figur 1 gezeigte hydrodynamische Kupplung weist ein Gehäuse 11 auf, das die erste Stirnseite 12, durch welche der Antrieb 15 geführt ist, die zweite Stirnseite 13, sowie eine die beiden Stirnseiten 12, 13 verbindende Umfangswand 14 umfasst. Vorliegend ist die Umfangswand 14 einteilig mit der zweiten Stirnseite 13 ausgeführt, und die erste Stirnseite 12 ist stirnseitig an der Umfangwand 14 angeschraubt.

Die das Pumpenrad 1 tragende Welle und die das Turbinenrad 2 tragende Welle sind jeweils in zwei Lagern 26 gelagert, welche vorteilhaft mit dem Arbeitsmedium geschmiert und/oder gekühlt werden. Zur Abdichtung des Innenraums des Gehäuses 14 an der Antriebswelle beziehungsweise der Abtriebswelle gegenüber die Umgebung sind Dichtringe beziehungsweise Dichtungen 27 vorgesehen. Dabei können Maßnahmen, insbesondere in Form von Expansionsräumen, getroffen sein, dass das Arbeitsmedium in den Lagerungen 26 entspannt wird, sodass in ihm enthaltenes Gas, das als Steuerdruckmedium verwendet wird, über die Dichtungen 27 an die Umgebung entgasen kann.

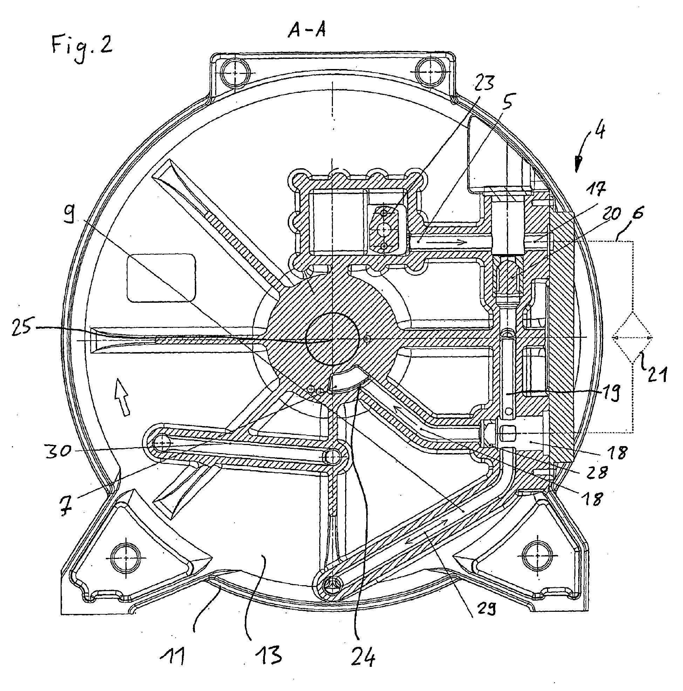

Im Gehäuse 11 der hydrodynamischen Kupplung ist ein Steuerdruckanschluss 10 vorgesehen, der im Vorratsraum 8 mündet, sodass ein Steuerdruckmedium über den Steuerdruckanschluss 10 (oder eine Vielzahl hiervon) in den Vorratsraum 8 eingeleitet werden kann, um das Arbeitsmedium, das sich im Vorratsraum 8 befindet, mehr oder minder zu verdrängen, je nach Höhe des Steuerdruckes des Steuerdruckmediums. Das verdrängte Arbeitsmedium strömt über eine arbeitsmediumleitende Verbindung 9, die nachfolgend mit Bezug auf die Figur 2 beschrieben wird, in den geschlossenen Arbeitsmediumkreislauf 4 (siehe ebenfalls die Figur 2) und von dort über den Arbeitsraumeintritt 7 in den Arbeitsraum 3, beispielsweise über zwischen dem Arbeitsraumeintritt 7 und dem Arbeitsraum 3 vorgesehene Füllbohrungen.

Wie man sieht, ist der Arbeitsraumeintritt 7 entsprechend dem Arbeitsraumaustritt 5 an der Schnittstelle des erweiterten Arbeitsraumes, das heißt in Strömungsrichtung vor dem Nebenraum 22 positioniert, wobei auch eine direkte Verbindung zwischen dem Arbeitsraumeintritt 7 und dem Arbeitsraum 3 vorbei am Nebenraum 22 vorgesehen sein könnte.

In der Figur 2 erkennt man nun die arbeitsmediumführenden Kanäle, die in der zweiten Stirnseite 13 integriert sind, in einer geschnittenen Darstellung. Die der Darstellung in der Figur 1 entsprechenden Elemente sind mit denselben Bezugszeichen versehen, sodass auf eine Erläuterung im Einzelnen verzichtet werden kann. Der Pfeil zeigt die Drehrichtung der Schaufelräder (Pumpenrad 1 und Turbinenrad 2) der hydrodynamischen Kupplung an.

Im Einzelnen erkennt man in der Figur 2 den Arbeitsraumaustritt 5 in Strömungsrichtung hinter der Staudruckpumpe 23, sowie den Arbeitsraumeintritt 7. Aus dem Arbeitsraumaustritt 5 strömt das Arbeitsmedium über einen Arbeitsmediumablauf 17 in den externen Kreislaufzweig 6, in welchem ein Wärmetauscher 21 zum Kühlen des Arbeitsmediums angeordnet ist. In der Regel wird der Wärmetauscher 21 von dem Arbeitsmedium durchströmt. Aus dem externen Kreislaufzweig 6 strömt das Arbeitsmedium über einen Arbeitsmediumzulauf 18 in den Arbeitsraumeintritt 7. Vorliegend ist im Arbeitsmediumzulauf 18 eine Blende 28 angeordnet, mittels welcher eine Drosselung des Arbeitsmediumstroms erzielt wird. In Strömungsrichtung hinter der Blende 28 ist dann unmittelbar vor dem Arbeitsraumeintritt 7 eine Querschnittserweiterung 24 des Arbeitsmediumzulaufes 18 vorgesehen, welche eine Expansion des Arbeitsmediums bis auf atmosphärischen Druck im Arbeitsraumeintritt 7 bewirkt, wodurch im Arbeitsmedium enthaltenes Gas, insbesondere das Steuerdruckmedium aus dem Arbeitsmedium entgast wird.

Die arbeitsmediumführenden Leitungen beziehungsweise die arbeitsmediumführenden Kanäle in dem Gehäuse 11 bilden demnach einen geschlossenen Arbeitsmediumkreislauf von dem Arbeitsraumaustritt 5, über den Arbeitsmediumablauf 17, den externen Kreislaufzweig 6, den Arbeitsmediumzulauf 18 und den Arbeitsraumeintritt 7 zurück in den Arbeitsraum und von dort erneut zum Arbeitsraumaustritt 5.

Der in der Figur 1 gezeigte Vorratsraum 8 ist über die in der Figur 2 geschnitten dargestellte arbeitsmediumleitende Verbindung 9 mit dem geschlossenen Arbeitsmediumkreislauf 4 verbunden. Vorliegend mündet die arbeitsmediumleitende Verbindung 9 in Strömungsrichtung des Arbeitsmediums vor der Blende 28 im geschlossenen Arbeitsmediumkreislauf 4. Von Vorteil ist es, wenn die arbeitsmediumleitende Verbindung 9 die einzige arbeitsmediumleitende Verbindung zwischen dem Vorratsraum 8 und dem geschlossenen Arbeitsmediumkreislauf 4 ist. In diesem Fall strömt bei einer Druckerhöhung im Vorratsraum 8 durch Einbringen von Steuerdruckmedium über den Steuerdruckanschluss 10 Arbeitsmedium aus dem Vorratsraum 8 durch die arbeitsmediumleitende Verbindung 9 in den geschlossenen Arbeitsmediumkreislauf 4 außerhalb des Arbeitsraumes 3, und bei einer entsprechenden Druckminderung im Vorratsraum 8 strömt Arbeitsmedium aus dem geschlossenen Arbeitsmediumkreislauf 4 außerhalb des Arbeitsraumes 3 über die arbeitsmediumleitende Verbindung 9 zurück in den Vorratsraum 8, siehe den Doppelpfeil 29. Eine Entlüftung des Vorratsraumes 8 zur Druckminderung in diesem kann entweder über den Steuerdruckanschluss 10 oder wenigstens einen zusätzlichen Entlüftungsanschluss beziehungsweise Entlüftungsleitung erfolgen.

In Strömungsrichtung des Arbeitsmediums parallel zum Wärmetauscher 21 ist ein Bypass 19 vorgesehen, der ebenfalls als arbeitsmediumführender Kanal im Gehäuse 11, vorliegend der zweiten Stirnseite 13 ausgeführt ist. Der Bypass 19 verbindet den Arbeitsmediumablauf 17 arbeitsmediumleitend mit dem Arbeitsmediumzulauf 18. Um eine Rückströmung von Arbeitsmedium aus dem Arbeitsmediumzulauf 18 in den Arbeitsmediumablauf 17 zu verhindern, ist im Bypass 19 ein Rückschlagventil 20 vorgesehen.

Um aus dem Nebenraum 22 nicht mittels der Staudruckpumpe 23 abgeschöpftes Arbeitsmedium wieder in den Arbeitsraum 3 strömen zu lassen, ist ein Rücklauf 30 vorgesehen, der vorliegend ebenfalls als arbeitsmediumführender Kanal in dem Gehäuse 11 beziehungsweise hier in der zweiten Stirnseite 13 integriert ist.

Wenn als Steuerdruckmedium ein anderes Gas als Luft verwendet wird, ist es günstig, wenn Maßnahmen getroffen sind, die eine Konzentration dieses Gases in der hydrodynamischen Kupplung vermindern oder vermeiden. Hierzu können eine Zuluftleitung (nicht dargestellt) und eine Abluftleitung (nicht dargestellt) vorgesehen sein, welche einen andauernden Luftdurchsatz durch die hydrodynamische Kupplung, insbesondere deren Arbeitsraum 3 und/oder den Nebenraum 22 bewirken, um eingetragenes gasförmiges Steuerdruckmedium, das beispielsweise ein Erdgas oder Methangas ist, auszutreiben und die Bildung eines zündfähigen Gemisches zu vermeiden. Alternativ kann auch eine gezielte Verdrängung von sauerstoffhaltiger Luft aus der hydrodynamischen Kupplung durch gezieltes Einleiten des Steuerdruckmediums vorgesehen sein. Besonders vorteilhaft ist hierzu eine Entlüftungsleitung des Vorratsraumes an der hydrodynamischen Kupplung, insbesondere deren Arbeitsraum, angeschlossen, sodass das aus dem Vorratsraum entlüftete Steuerdruckmedium in die hydrodynamische Kupplung eingeleitet wird und über eine Abluftleitung entweicht. Wenn in der Abluftleitung ein Überdruckventil, insbesondere Rückschlagventil, oder sonstiges Drosselorgan vorgesehen ist, um einen Überdruck des entlüfteten Bereichs der hydrodynamischen Kupplung sicherzustellen, kann keine Luft durch eine undichte Stelle oder die Abluftleitung ungewollt in die hydrodynamische Kupplung eindringen, und die Gefahr der Bildung eines zündfähigen Gemischs wird vermindert.

## Patentansprüche

1. Hydrodynamische Kupplung
mit einem Pumpenrad (1) und einem Turbinenrad (2), die miteinander einen torusförmigen mit Arbeitsmedium befüllbaren Arbeitsraum (3) ausbilden;
mit einem geschlossenen Arbeitsmediumkreislauf (4), der sich von dem Arbeitsraum (3) über einen Arbeitsraumaustritt (5), einen externen Kreislaufzweig (6) und einen Arbeitsraumeintritt (7) zurück in den Arbeitsraum (3) erstreckt;
mit einem außerhalb des Arbeitsraumes (3) und außerhalb des geschlossenen Arbeitsmediumkreislaufes (4) positionierten Vorratsraum (8), zur Aufnahme von aus dem Arbeitsraum (3) zur Verminderung des Füllungsgrades des Arbeitsraumes (3) ausgeleitetem Arbeitsmedium, welcher über eine arbeitsmediumleitende Verbindung (9) außerhalb des Arbeitsraumes (3) am geschlossenen Arbeitsmediumkreislauf (4) angeschlossen ist; wobei
der Vorratsraum (8) als gegenüber der Umgebung druckdicht abgeschlossener Raum mit einem Steuerdruckanschluss (10) zur verdrängenden Beaufschlagung des Arbeitsmediums im Vorratsraum (8) mit einem Steuerdruck ausgeführt ist;
**dadurch gekennzeichnet, dass**
der Vorratsraum (8) als Ringraum ausgeführt ist, der sich innerhalb der hydrodynamischen Kupplung radial außerhalb des Arbeitsraumes (3) um diesen herum erstreckt.

2. Hydrodynamische Kupplung gemäß Anspruch 1, **dadurch gekennzeichnet, dass** der Vorratsraum (8) als stationärer Raum ausgeführt ist und insbesondere durch eine stationäre Trennwand von dem Pumpenrad (1) und dem Turbinenrad (2) abgetrennt ist.

3. Hydrodynamische Kupplung gemäß einem der Ansprüche 1 oder 2, **dadurch gekennzeichnet, dass** die hydrodynamische Kupplung von einem Gehäuse (11) umschlossen wird, umfassend zwei sich gegenüberliegende Stirnseiten (12, 13), die durch eine Umfangswand (14) miteinander verbunden sind, wobei durch die erste Stirnseite (12) insbesondere der Antrieb (15) für das Pumpenrad (1) und durch die zweite Stirnseite (13) insbesondere der Abtrieb (16) des Turbinenrades (2) geführt sind, und eine Vielzahl von arbeitsmediumführenden Kanälen in dem Gehäuse (11), insbesondere auf der ersten Stirnseite (12) oder der zweiten Stirnseite (13) integriert oder an diesem angeschlossen sind, umfassend einen Arbeitsmediumablauf (17), der das Arbeitsmedium aus dem Arbeitsraumaustritt (5) in den externen Kreislaufzweig (6) führt, einen Arbeitsmediumzulauf (18), der das Arbeitsmedium aus dem externen Kreislaufzweig (6) in den Arbeitsraumeintritt (7) führt, und die arbeitsmediumleitende Verbindung (9), mittels welcher der Vorratsraum (8) am geschlossenen Arbeitsmediumkreislauf (4) angeschlossen ist.

4. Hydrodynamische Kupplung gemäß Anspruch 3, **dadurch gekennzeichnet, dass** die Vielzahl von in dem Gehäuse (11) integrierten oder an diesem angeschlossenen Kanälen ferner einen Bypass (19) umfasst, welcher den Arbeitsmediumablauf (17) parallel zu der arbeitsmediumleitenden Verbindung (9) mit dem Arbeitsmediumzulauf (18) arbeitsmediumleitend verbindet, wobei in dem Bypass (19) insbesondere ein Rückschlagventil (20) angeordnet ist, das eine Arbeitsmediumströmung ausschließlich in Richtung vom Arbeitsmediumablauf (17) zum Arbeitsmediumzulauf (18) ermöglicht.

5. Hydrodynamischer Kupplung gemäß einem der Ansprüche 3 oder 4, **dadurch gekennzeichnet, dass** in dem externen Kreislaufzweig (2), der insbesondere teilweise oder vollständig außerhalb des Gehäuses (11) der hydrodynamischen Kupplung geführt ist, ein Wärmetauscher (21) zum Kühlen des Arbeitsmediums angeordnet ist.

6. Hydrodynamische Kupplung gemäß einem der Ansprüche 1 bis 5, **dadurch gekennzeichnet, dass** die hydrodynamische Kupplung einen mit dem Arbeitsraum (3) in arbeitsmediumleitender Verbindung stehenden Nebenraum (22) aufweist, der insbesondere axial neben dem Arbeitsraum (3) und radial innerhalb des Vorratsraumes (8) positioniert ist, und der Nebenraum (22) mit dem Vorratsraum (8) arbeitsmediumleitend verbunden ist, sodass das aus dem Arbeitsraum (3) in den Nebenraum (22) eingeströmte Arbeitsmedium zurück in den Vorratsraum (8) gefördert wird, insbesondere mittels einer Staudruckpumpe (23), die in den Nebenraum (22) ragt.

7. Hydrodynamische Kupplung gemäß einem der Ansprüche 3 bis 6, **dadurch gekennzeichnet, dass** der Arbeitsmediumzulauf (18) eine Querschnittserweiterung (24), insbesondere sprunghafte Querschnittserweiterung (24) aufweist, um das Arbeitsmedium zu expandieren, insbesondere bis auf einen atmosphärischen Druck.

8. Hydrodynamische Kupplung gemäß einem der Ansprüche 1 bis 7, **dadurch gekennzeichnet, dass** der Vorratsraum (8) eine Entlüftungsleitung aufweist, die in der Umgebung oder in der hydrodynamischen Kupplung, insbesondere im Arbeitsraum (3) oder Nebenraum (22) derselben mündet, um aus dem Vorratsraum (8) entlüftetes Steuerdruckmedium abzuführen.

9. Hydrodynamische Kupplung gemäß Anspruch 8, **dadurch gekennzeichnet, dass** die Entlüftungsleitung in der hydrodynamischen Kupplung, insbesondere deren Arbeitsraum (3) oder Nebenraum (22) mündet, und an der hydrodynamischen Kupplung, insbesondere deren Arbeitsraum (3) oder Nebenraum (22) eine Abluftleitung mit einem Überdruckventil oder Drosselorgan angeschlossen ist, über welche das aus dem Vorratsraum (8) entlüftete Steuerdruckmedium unter Aufrechterhalten eines Überdruckes im entlüfteten Bereicht der hydrodynamischen Kupplung an die Umgebung abgeführt wird.

10. Verwendung einer hydrodynamischen Kupplung zum Antrieb eines Lüfterrades, das ein Medium, insbesondere ein anderes Gas als Luft, durch Erzeugen eines Kühlluftstromes unmittelbar oder mittelbar kühlt;
mit einem Pumpenrad (1) und einem Turbinenrad (2), die miteinander einen torusförmigen mit Arbeitsmedium befüllbaren Arbeitsraum (3) ausbilden;
mit einem geschlossenen Arbeitsmediumkreislauf (4), der sich von dem Arbeitsraum (3) über einen Arbeitsraumaustritt (5), einen externen Kreislaufzweig (6) und einen Arbeitsraumeintritt (7) zurück in den Arbeitsraum (3) erstreckt;
mit einem außerhalb des Arbeitsraumes (3) und außerhalb des geschlossenen Arbeitsmediumkreislaufes (4) positionierten Vorratsraum (8), zur Aufnahme von aus dem Arbeitsraum (3) zur Verminderung des Füllungsgrades des Arbeitsraumes (3) ausgeleitetem Arbeitsmedium, welcher über eine arbeitsmediumleitende Verbindung (9) außerhalb des Arbeitsraumes (3) am geschlossenen Arbeitsmediumkreislauf (4) angeschlossen ist; wobei
der Vorratsraum (8) als gegenüber der Umgebung druckdicht abgeschlossener Raum mit einem Steuerdruckanschluss (10) zur verdrängenden Beaufschlagung des Arbeitsmediums im Vorratsraum (8) mit einem Steuerdruck ausgeführt ist;
**dadurch gekennzeichnet, dass**
das Medium zugleich als Steuermedium der hydrodynamischen Kupplung verwendet wird.

## Claims

1. A hydrodynamic coupling,
having a pump wheel (1) and a turbine wheel (2), which form together a toroidal working chamber (3) which can be filled with working medium;
with a closed working medium circuit (4), which extends from the working chamber (3) via a working chamber outlet (5), an external circuit branch (6) and a working chamber inlet (7) back into the working chamber (3);
with a storage chamber (8) positioned outside the working chamber (3) and outside the closed working medium circuit (4), for receiving the working medium evacuated from the working chamber (3) for reducing the filling level of the working chamber (3), which is connected via a connection for conveying the working medium (9) outside the working chamber (3) to the closed working medium circuit (4); wherein
the storage chamber (8) is designed as a confined space which is pressure-tight to the surrounding atmosphere, having a control pressure port (10) so as to forcibly displace the working medium;
**characterised in that**
the storage chamber (8) is designed as an annular chamber, which extends inside the hydrodynamic coupling radially outside the working chamber (3) around it.

2. The hydrodynamic coupling according to claim 1, **characterised in that** the storage chamber (8) is designed as a stationary chamber and is in particular separated by a stationary partition wall from the pump wheel (1) and the turbine wheel (2).

3. The hydrodynamic coupling according to one of claims 1 or 2, **characterised in that** the hydrodynamic coupling is enclosed by a housing (11), comprising two front sides (12, 13) opposite to one another, which are connected to one another by a circumferential wall (14), whereas in particular the drive unit (15) for the pump wheel (1) is led through the first front side (12) and in particular the output (16) of the turbine wheel (2) is led through the second front side (13), and a plurality of channels guiding the working medium are integrated in the housing (11), in particular on the first front face (12) or on the second front face (13) or they are connected thereto, comprising a working medium outlet (17), which guides the working medium from the working chamber outlet (5) into the external circuit branch (6), a working medium supply (18), which guides the working medium from the external circuit branch (6) into the working chamber inlet (7), and the connection (9) for conveying the working medium, by means of which the storage chamber (8) is connected to the closed working medium circuit (4).

4. The hydrodynamic coupling according to claim 3, **characterised in that** the plurality of channels integrated in the housing (11) or connected thereto moreover comprises a bypass (19) which connects the working medium outlet (17) parallel to the connection (9) for conveying the working medium, with the working medium supply (18) for conveying the working medium, whereas in particular a return valve (20) is arranged in the bypass (19), which enables a flow of working medium exclusively in the direction of the working medium outlet (17) to the working medium supply (18).

5. The hydrodynamic coupling according to one of claims 3 or 4, **characterised in that** a heat exchanger (21) for cooling the working medium is arranged in the external circuit branch (2), which is guided in particular partially or completely outside the housing (11) of the hydrodynamic coupling.

6. The hydrodynamic coupling according to one of claims 1 to 5, **characterised in that** the hydrodynamic coupling comprises an adjoining chamber (22) in connection with the working chamber (3) for conveying the working medium, the adjoining chamber which is positioned in particular axially close to the working chamber (3) and radially inside the storage chamber (8), and the adjoining chamber (22) is connected to the storage chamber (8) for conveying the working medium, so that the working medium flowing out of the working chamber (3) into the adjoining chamber (22) is conveyed back into the storage chamber (8), in particular by means of a dynamic pressure pump (23), which protrudes into the adjoining chamber (22).

7. The hydrodynamic coupling according to one of claims 3 to 6, **characterised in that** the working medium supply (18) includes a widened cross-section (24), in particular a suddenly widened cross-section (24), to expand the working medium, in particular to reach atmospheric pressure.

8. The hydrodynamic coupling according to one of claims 1 to 7, **characterised in that** the storage chamber (8) comprises a venting pipe which opens out into the surrounding atmosphere or into the hydrodynamic coupling, in particular to the working chamber (3) or the adjoining chamber (22) thereof, so as to convey vented control pressure medium from the storage chamber (8).

9. The hydrodynamic coupling according to claim 8, **characterised in that** the venting pipe opens out into the hydrodynamic coupling, in particular its working chamber (3) or adjoining chamber (22), and an air outlet pipe is connected to the hydrodynamic coupling, in particular to its working chamber (3) or adjoining chamber (22), with an overpressure valve or a throttle member via which the control pressure medium vented from the storage chamber (8) by maintaining an overpressure in the vented area of the of the hydrodynamic coupling is discharged to the surrounding atmosphere.

10. The use of a hydrodynamic coupling for driving a fan wheel, which directly or indirectly cools down a medium, in particular another gas than air, by generating a cooling airflow;
having a pump wheel (1) and a turbine wheel (2), which form together a toroidal working chamber (3) which can be filled with working medium;
with a closed working medium circuit (4), which extends from the working chamber (3) via a working chamber outlet (5), an external circuit branch (6) and a working chamber inlet (7) back into the working chamber (3);
with a storage chamber (8) positioned outside the working chamber (3) and outside the closed working medium circuit (4), for receiving the working medium evacuated from the working chamber (3) for reducing the filling level of the working chamber (3), which is connected via a connection for conveying the working medium (9) outside the working chamber (3) on the closed working medium circuit (4); wherein
the storage chamber (8) is designed as a confined space which is pressure-tight to the environment, having a control pressure port (10) so as to forcibly displace the working medium in the storage chamber (8) with a control pressure;
**characterised in that**
the medium is used at the same time as a control medium of the hydrodynamic coupling.

## Revendications

1. Embrayage hydrodynamique, présentant une roue de pompe (1) et une roue de turbine (2), formant ensemble une chambre de travail (3) toroïdale remplie ou pouvant être remplie d'un fluide de travail;
présentant un circuit de fluide de travail fermé (4), s'étendant à partir de la chambre de travail (3) par le biais d'une sortie de chambre de travail (5), d'un embranchement de circuit externe (6) et d'une entrée de chambre de travail (7) pour revenir dans la chambre de travail (3);
présentant une chambre de stockage (8) positionnée à l'extérieur de la chambre de travail (3) et à l'extérieur du circuit de fluide de travail fermé (4), pour recevoir du fluide de travail guidé à partir de la chambre de travail (3) pour réduire le degré de remplissage de la chambre de travail (3), qui est connecté par le biais d'une connexion (9) guidant le fluide de travail à l'extérieur de la chambre de travail (3) au niveau du circuit de fluide de travail fermé (4); où la chambre de stockage (8) est sous forme de chambre scellée de manière étanche à la pression par rapport à l'environnement avec une connexion de pression de commande (10) pour refouler le fluide de travail dans la chambre de stockage (8) avec une pression de commande; **caractérisé en ce que** la chambre de stockage (8) est conçue comme chambre annulaire, s'étendant à l'intérieur de l'embrayage hydrodynamique radialement à l'extérieur de la chambre de travail (3) et autour de cette dernière.

2. Embrayage hydrodynamique selon la revendication 1, **caractérisé en ce que** la chambre de stockage (8) est conçue comme chambre stationnaire et en particulier délimitée par une cloison stationnaire de la roue de pompe (1) et de la roue de turbine (2).

3. Embrayage hydrodynamique conformément à l'une des revendications 1 ou 2, **caractérisé en ce que** l'embrayage hydrodynamique est entouré d'un carter (11), comprenant deux faces (12, 13) opposées l'une à l'autre, qui sont connectées entre elles par une cloison périphérique (14), où en particulier l'entraînement (15) pour la roue de pompe (1) est guidé par la première face (12) et en particulier la prise de force (16) de la roue de turbine (2) est guidée par la seconde face (13), et une pluralité de canaux de guidage de fluide de travail est intégrée dans le carter (11), en particulier sur la première face (12) et la seconde face (13), ou bien est connectée audit canal, comprenant une sortie de fluide de travail (17), conduisant le fluide de travail à partir de la sortie de la chambre de travail (5) dans l'embranchement de circuit externe (6), une arrivée de fluide de travail (18), conduisant le fluide de travail à partir de l'embranchement de circuit externe (6) dans l'entrée de chambre de travail (7), et la connexion (9) guidant le fluide de travail, au moyen de laquelle la chambre de travail (8) est connectée au circuit de fluide de travail fermé (4).

4. Embrayage hydrodynamique selon la revendication 3, **caractérisé en ce que** la pluralité de canaux intégrés dans le carter (11) ou bien connectés à celui-ci comporte de plus une dérivation (19), qui relie la sortie de fluide de travail (17) en parallèle à la connexion de guidage de fluide de travail (9) avec l'arrivée de fluide de travail (18) guidant le fluide de travail, où un clapet anti-retour (20) est disposé dans la dérivation (19) en particulier, clapet permettant l'écoulement du fluide de travail exclusivement en direction de la sortie de fluide de travail (17) vers l'arrivée de fluide de travail (18).

5. Embrayage hydrodynamique conformément à l'une des revendications 3 ou 4, **caractérisé en ce qu'**un échangeur thermique (21) prévu pour refroidir le fluide de travail est disposé dans l'embranchement de circuit externe (2), qui est guidé en particulier partiellement ou complètement à l'extérieur du carter (11) de l'embrayage hydrodynamique.

6. Embrayage hydrodynamique conformément à l'une des revendications 1 à 5, **caractérisé en ce que** l'embrayage hydrodynamique présente une chambre auxiliaire (22) connectée pour guider le fluide de travail avec la chambre de travail (3), chambre positionnée en particulier axialement à côté de la chambre de travail (3) et radialement à l'intérieur de la chambre de stockage (8), et la chambre auxiliaire (22) est reliée à la chambre de stockage (8) pour guider le fluide de travail, de sorte que le fluide de travail s'écoulant dans la chambre auxiliaire (22) à partir de la chambre de travail (3) est renvoyé dans la chambre de stockage (8), en particulier au moyen d'une pompe à accumulation de pression (23) pénétrant dans la chambre auxiliaire (22).

7. Embrayage hydrodynamique conformément à l'une des revendications 3 à 6, **caractérisé en ce que** l'arrivée de fluide de travail (18) présente un prolongement de section transversale (24), en particulier un prolongement de section transversale à ressort (24), pour dilater le fluide de travail, en particulier pour atteindre la pression atmosphérique.

8. Embrayage hydrodynamique conformément à l'une des revendications 1 à 7, **caractérisé en ce que** la chambre de stockage (8) présente une conduite d'aération, qui sort à l'air libre ou bien dans l'embrayage hydrodynamique, en particulier dans la chambre de travail (3) ou la chambre auxiliaire (22), pour évacuer le fluide de pression de commande refoulé de la chambre de stockage (8).

9. Embrayage hydrodynamique selon la revendication 8, **caractérisé en ce que** la conduite d'aération sort dans l'embrayage hydrodynamique, en particulier sa chambre de travail (3) ou chambre auxiliaire (22), et une conduite d'évacuation est connectée à un clapet de supression ou un étrangleur au niveau de l'embrayage hydrodynamique, en particulier sa chambre de travail (3) ou chambre auxiliaire (22), par le biais de laquelle conduite le fluide de pression de commande refoulé de la chambre de stockage (8) est rejeté à l'air libre en maintenant une surpression dans la zone aérée de l'embrayage hydrodynamique.

10. Utilisation d'un embrayage hydrodynamique pour entraîner une roue de ventilateur, qui refroidit directement or indirectement un fluide, en particulier un autre gaz que l'air, en générant un flux d'air de refroidissement;
présentant une roue de pompe (1) et une roue de turbine (2), formant ensemble une chambre de travail (3) toroïdale remplie ou pouvant être remplie d'un fluide de travail;
présentant un circuit de fluide de travail fermé (4), s'étendant à partir de la chambre de travail (3) par le biais d'une sortie de chambre de travail (5), d'un embranchement de circuit externe (6) et d'une entrée de chambre de travail (7) pour revenir dans la chambre de travail (3);
présentant une chambre de stockage (8) positionnée à l'extérieur de la chambre de travail (3) et à l'extérieur du circuit de fluide de travail fermé (4), pour recevoir du fluide de travail guidé à partir de la chambre de travail (3) pour réduire le degré de remplissage de la chambre de travail (3), qui est connecté par le biais d'une connexion (9) guidant le fluide de travail à l'extérieur de la chambre de travail (3) au niveau du circuit de fluide de travail fermé (4); où la chambre de stockage (8) est sous forme de chambre scellée de manière étanche à la pression par rapport à l'environnement avec une connexion de pression de commande (10) pour refouler le fluide de travail dans la chambre de stockage (8) avec une pression de commande;
**caractérisé en ce que** l'on utilise le fluide simultanément comme fluide de commande de l'embrayage hydrodynamique.
